# EUROPEAN PATENT SPECIFICATION

(11) **EP 0 701 251 B1**
(45) Date of publication and mention of the grant of the patent: **22.05.2002**
(21) Application number: 95306277.5
(22) Date of filing: 07.09.1995
(51) Int. Cl.: G11B 7/007, G11B 7/14, G11B 11/10, G11B 7/00

(54) **Optical recording medium and method of recording and/or reproducing on the medium**
Optisches Aufzeichungsmedium und Verfahren zur Aufzeichnung und/oder Wiedergabe auf das/von dem Medium
Milieu d'enregistrement optique et méthode d'enregistrement et/ou de reproduction sur ce milieu

(30) Priority: 08.09.1994 JP 21492594; 25.11.1994 JP 29130994; 06.09.1995 JP 22883795
(43) Date of publication of application: 13.03.1996
(73) Proprietor: CANON KABUSHIKI KAISHA, Tokyo (JP)
(72) Inventor: Fujii, Eiichi, c/o Canon K.K., Tokyo (JP)
(74) Representative: Beresford, Keith Denis Lewis

(56) References cited:
- EP-A- 0 343 727
- EP-A- 0 451 297
- EP-A- 0 525 192
- EP-A- 0 608 134
- PATENT ABSTRACTS OF JAPAN vol. 016 no. 361 (P-1396) ,5 August 1992 & JP-A-04 111235 (MITSUBISHI ELECTRIC CORP) 13 April 1992,
- PATENT ABSTRACTS OF JAPAN vol. 016 no. 361 (P-1396) ,5 August 1992 & JP-A-04 111236 (MITSUBISHI ELECTRIC CORP) 13 April 1992,
- PATENT ABSTRACTS OF JAPAN vol. 017 no. 254 (P-1538) ,19 May 1993 & JP-A-04 370541 (TDK CORP) 22 December 1992,
- PATENT ABSTRACTS OF JAPAN vol. 017 no. 471 (P-1601) ,26 August 1993 & JP-A-05 109120 (BROTHER IND LTD) 30 April 1993,
- PATENT ABSTRACTS OF JAPAN vol. 012 no. 068 (P-672) ,3 March 1988 & JP-A-62 208445 (NEC CORP) 12 September 1987,
- PATENT ABSTRACTS OF JAPAN vol. 016 no. 125 (P-1331) ,30 March 1992 & JP-A-03 290842 (BROTHER IND LTD) 20 December 1991,
- PATENT ABSTRACTS OF JAPAN vol. 009 no. 037 (P-335) ,16 February 1985 & JP-A-59 178640 (TOSHIBA KK) 9 October 1984,

## Description

This invention relates to a method of recording and/or reproducing information on an optical recording medium on which recording and reproduction of information are effected by use of a super-resolving technique.

As optical memories for recording information by a light beam being applied thereto, and detecting the reflected light therefrom and effecting the reproduction of the information, there are known various optical memories such as an optical memory of the ROM type which records information by a phase pit, an optical memory of the write once type which forms holes in recording film by application of a light beam to thereby record information, an optical memory of the phase variation type which varies the crystal phase of recording film by application of a light beam to thereby effect recording, and a magneto-optical memory which varies the direction of magnetization of a recording layer by application of a light beam and application of a magnetic field to thereby effect recording. In such optical memories, it may be said that the reproduction resolving power of a signal is determined almost by the wavelength of reproducing light and the numerical aperture (N.A.) of an objective lens and the pit period of the detection limit is approximately λ/(2·N.A.) and the recording density of information is determined by these factors. However, it is not easy to shorten the wavelength of the reproducing light or to increase the numerical aperture of the objective lens and therefore, an attempt has been made to contrive a recording medium and a reproducing method to thereby increase the recording density of information. For example, there has been proposed a super-resolution reproducing technique of improving reproduction resolving power beyond the detection limit determined by the wavelength and the numerical aperture of the objective lens.

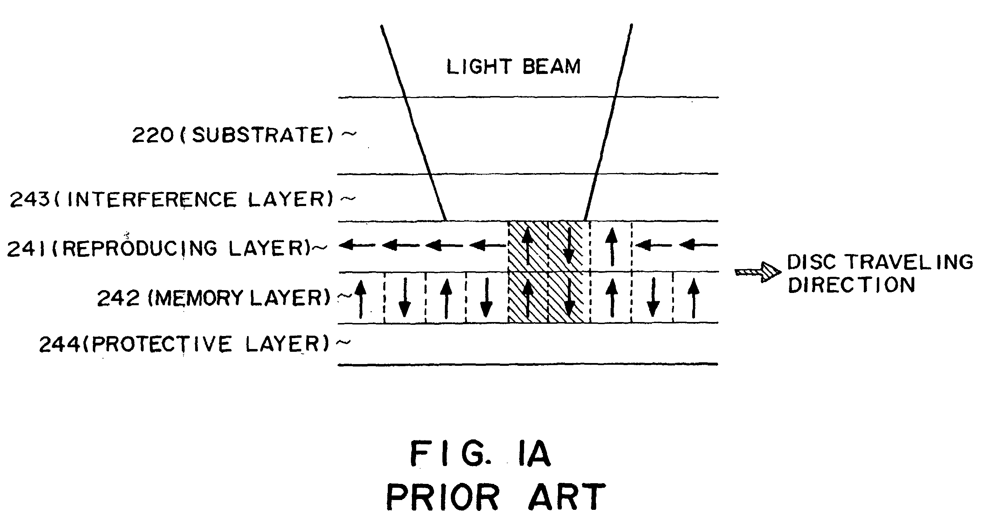

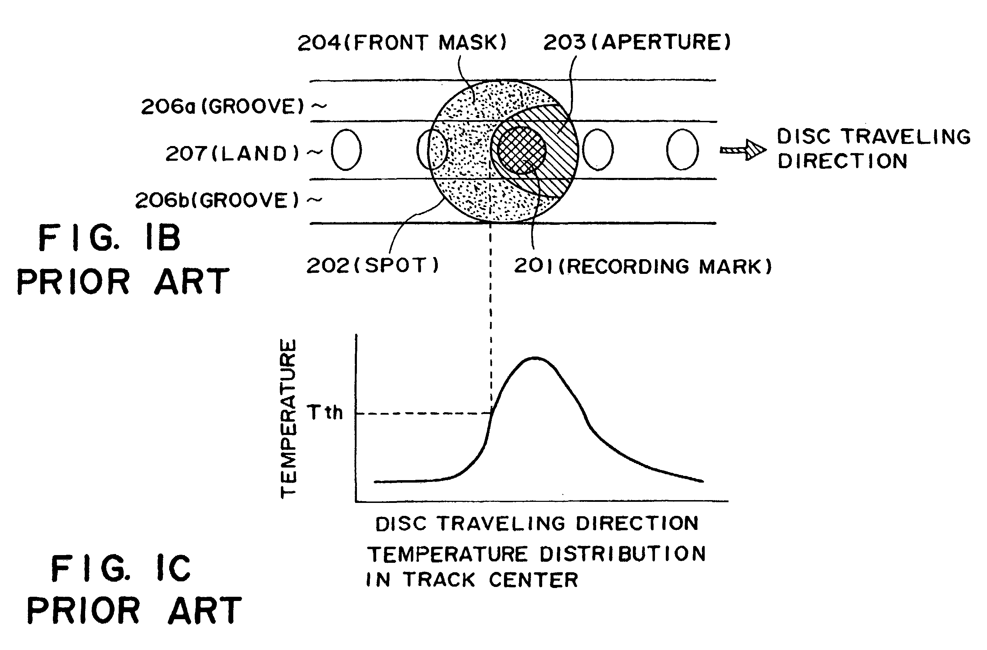

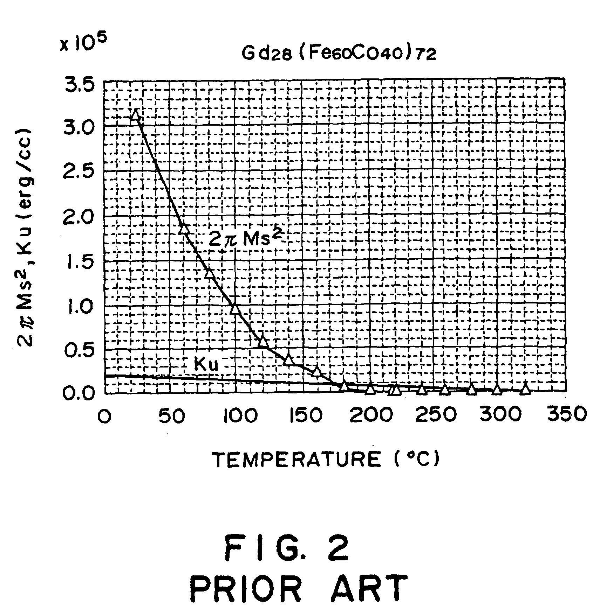

For example, in a magneto-optical recording medium disclosed in Japanese Laid-Open Patent Application No. 6-124500, a medium construction as shown in Figures 1A to 1C of the accompanying drawings is proposed as a super-resolving technique for realizing recording density greater than the optical resolving power of reproducing light. Figure 1A shows a cross-sectional view of an optical disc which is an example of the super-resolving technique. A substrate 220 is usually a transparent material such as glass or polycarbonate, and is formed in advance with concentric or spiral grooves (grooves 206) which form guide tracks. Recording information is recorded along a land and/or the grooves. On the substrate 220, there are successively formed an interference layer 243, a first magnetic layer (hereinafter referred to as the reproducing layer) 241, a second magnetic layer (hereinafter referred to as the memory layer) 242 and a protective layer 244. The interference layer 243 is used to enhance the Kerr effect, and the protective layer 244 is used to protect the magnetic layers. Arrows in the magnetic layers represent the directions of iron family element sub-lattice magnetization in the film. The memory layer 242 is, for example, film of TbFeCo, DyFeCo or the like which is great in vertical magnetic anisotropy, and recording information forms a magnetic domain depending on whether the magnetization of this layer is upward or downward relative to the surface of the film, and is held. The reproducing layer 241 is formed of a material of composition which is great in saturated magnetization Ms and small in vertical magnetic anisotropy and superior in rare earth element sub-lattice magnetization. Figure 2 of the accompanying drawings shows an example of the static characteristic of the reproducing layer 241. At room temperature, this layer is in-surface magnetized film, but with the rise of temperature, the saturated magnetization Ms gradually decreases and when a predetermined temperature is reached, the relation of magnitude between the vertical magnetic anisotropy Ku and 2πMs² is reversed and therefore, this layer becomes vertically magnetized film. Figure 2 shows the static characteristic in the single body of the reproducing layer, but when it is laminated with the memory layer 242, the exchange coupling force with the memory layer 242 works and therefore, the reproducing layer becomes vertically magnetized film at a lower temperature Tth, and the direction of the iron family element sub-lattice magnetization of the reproducing layer 241 when it becomes vertically magnetized film becomes the direction in which it is exchange-coupled to the memory layer 242. When light for information reproduction is applied to the disc of such a medium construction from the substrate 220 side, the temperature gradient at the center of the data track becomes such as shown in Figure 1C, and when this is viewed from the substrate 220 side, the isothermal line of Tth comes to exist in a spot as shown in Figure 1B. Thereupon, as previously described, in the portion below Tth, the reproducing layer 241 becomes in-surface magnetized film and therefore does not contribute to the polar Kerr effect (forms a front mark 204) and thus, the recording magnetic domain retained on the memory layer 242 becomes invisible by being masked. On the other hand, in the portion above Tth, the reproducing layer 241 becomes vertically magnetized film and the direction of the iron family element sub-lattice magnetization becomes the same direction as the recording information by the exchange coupling from the memory layer 242. As a result, the recording magnetic domain of the memory layer 242 is transferred to only the portion of an aperture 103 which is small as compared with the size of a spot 202 and therefore, super-resolution is realized.

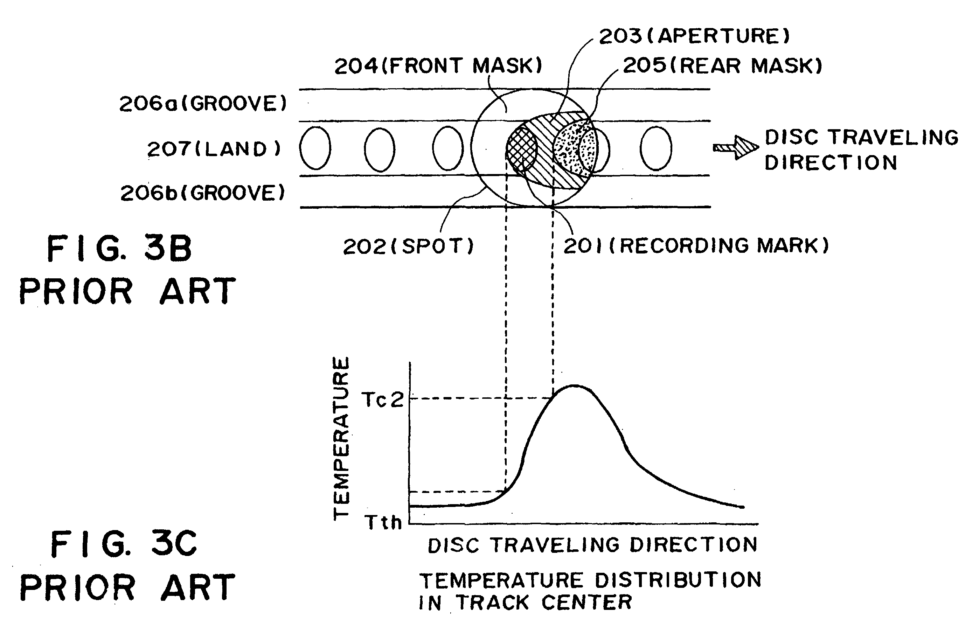

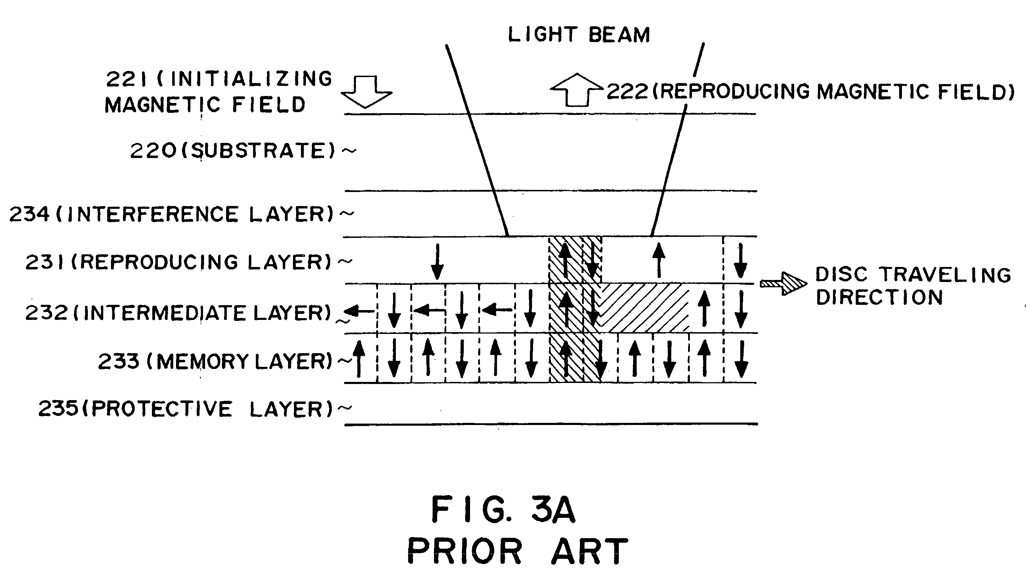

Also, in super-resolution reproducing methods disclosed in Japanese Laid-Open Patent Application No. 3-93058 and Japanese Laid-Open Patent Application No. 4-255946, use is made of a medium comprising a reproducing layer 231, a third magnetic layer (hereinafter referred to as the intermediate layer) 232 and a memory layer 233, as shown in Figures 3A to 3C of the accompanying drawings. Prior to the reproduction of information, the directions of magnetization of the reproducing layer 231 are aligned into one direction by an initializing magnetic field 221 and the magnetic domain information of the memory layer 233 is masked, whereafter a light spot 202 is applied and in a low temperature area in the temperature distribution of the medium created at that time, the initialized state is maintained by the reproducing layer 231 (a front mask 204 is formed) and in the high temperature area of the intermediate layer 232 above the curie temperature Tc2, the reproducing layer 231 is forcibly oriented in the direction of a reproducing magnetic field 222 (a rear mask 205 is formed) and the actually effective size of the reproducing spot is made small so that only in the medium temperature area, the magnetized domain information of the memory layer 233 may be transferred, whereby a recording mask 201 below the diffraction limit of light is made reproducible to thereby improve line density.

Since in these conventional super-resolving systems, the front mask 204 in the low temperature area extends in the direction of the adjacent track, attempt is made to improve line recording density and at the same time, track density.

However, in the reproducing method using the above-described super-resolution reproducing technique, the line recording density of information is greatly improved, but no consideration has been paid to the tracking during the recording and reproduction of information and therefore, the improvement in information track recording density has been not sufficient. That is, when tracking is to be effected with a tracking guide groove comprising a continuous groove being provided in an optical recording medium, a track pitch of the order of λ/N.A. is usually used to effect stable tracking control, but if the track pitch is narrowed to increase track recording density, tracking error signals will decrease and tracking control will become remarkably difficult and therefore, it has been difficult to greatly enhance the track recording density.

Also, for example, Japanese Laid-Open Patent Application No. 3-93058 discloses a method of recording information on both of a land and a groove in order to improve information track recording density, but in this method, the quantity of reflected light in the groove portion is small as compared with the quantity of reflected light on the land portion, and this has led to the disadvantage that it is difficult to obtain a high S/N ratio in the groove portion and it is impossible to achieve track recording density exceeding two times that obtained by the ordinary method of recording on the land portion. Accordingly, the prior-art optical information recording method has been limited in the improvement in track recording density and has not been able to sufficiently make the most of the capability of a super-resolution information recording medium.

EP-A-0 608 134 discloses a method for recording and reproducing information on a land portion sandwiched between a pair of grooves on a magneto-optical recording disk. This feature is included in the pre-characterising portion of claim 1.

So, it is the object of the present invention to solve such problems and to provide an optical recording and/or reproducing method which enables the capability of a super-resolution optical recording medium to be fully displayed and can thereby greatly improve the recording density of information.

According to the present invention, there is provided a method for effecting at least one of recording information on and of reproducing information from one of a plurality of information tracks formed on a land portion sandwiched between a pair of groove portions on a recording medium, the method being characterized in that: at least one of recording information on and reproducing information from each of the information tracks is effected by a single light beam, the information track on or from which said at least one of recording and reproducing is effected being changed over by applying an offset to the tracking control of the light beam.

A number of embodiments of the invention will hereinafter be described in detail by way of example with reference to the accompanying drawings.
Figures 1A to 1C show an example of the super-resolving technique according to the prior art.
Figure 2 is a graph showing the characteristic of a medium shown in Figures 1A to 1C.
Figures 3A to 3C show another example of the super-resolving technique according to the prior art.
Figure 4 shows an example of the layer construction of a medium used in an embodiment of the present invention.
Figure 5 illustrates an information recording method according to an embodiment of the present invention.
Figure 6 illustrates an information reproducing method according to an embodiment of the present invention.
Figure 7 shows another example of the layer construction of the medium used in an embodiment of the present invention.
Figure 8 shows a driving apparatus used in an embodiment of the present invention.
Figure 9 shows the details of the AT and AF control circuit 27 of Figure 8.

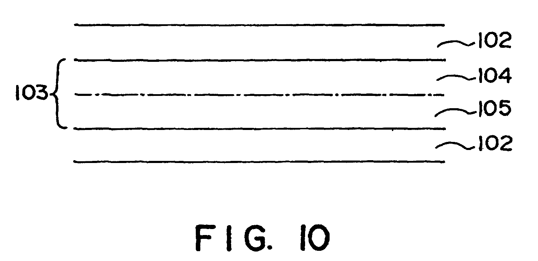

Figure 10 is a plan view showing the construction of the information tracks of the medium used in an embodiment of the present invention.

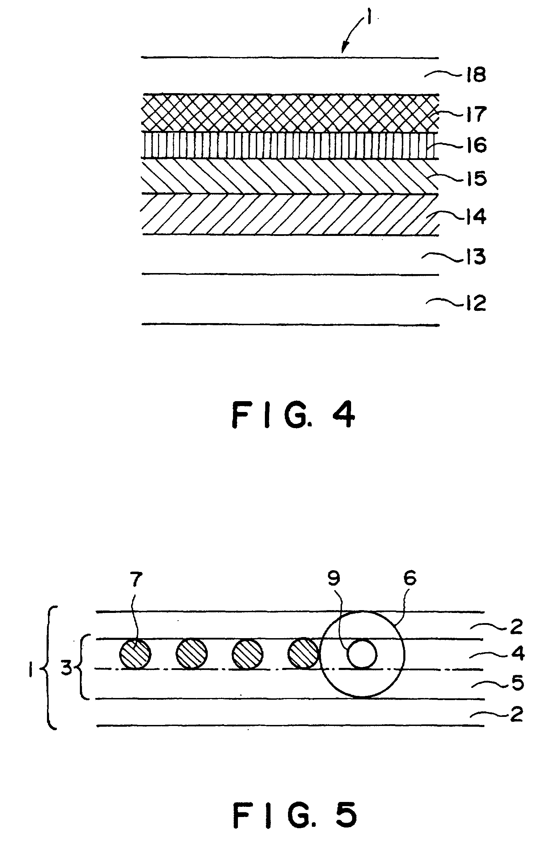

An embodiment of the present invention will hereinafter be described in detail with reference to the drawings. Description will first be made of an example of an optical recording medium capable of super-resolution reproduction which is used in the optical recording and reproducing method of the present invention. The layer construction of the recording medium used in this embodiment is the same as that described in the aforementioned Japanese Laid-Open Patent Application No. 3-93058. Figure 4 shows the cross-sectional structure of a magneto-optical disc capable of super-resolution reproduction.

In Figure 4, reference numeral 12 designates a disc-like transparent substrate formed of glass, plastic or the like, and a dielectric material layer 13, a first reproducing layer 14, a second reproducing layer 15, an intermediate layer 16, a second holding layer 17 and a dielectric material layer 18 are successively laminated on the transparent substrate 12. The first reproducing layer 14 is vertically magnetized film which is high in curie temperature and great in Kerr rotation angle and small in coercive force, and is formed of GdFeCo (film thickness 300 Å). The second reproducing layer 15 may preferably be great in vertical magnetic anisotropy and low in curie temperature and have a coercive force of several kilooersteds at room temperature and therefore is formed of TbFe (film thickness 200 Å). The intermediate layer 16 is a layer for adjusting the exchange coupling force between the second reproducing layer 15 and the second holding layer 17 and is formed of GdFeCo (film thickness 100 Å). The record holding layer 17 need be great in vertical magnetic anisotropy and greater in curie temperature and coercive force than the second reproducing layer 15 and therefore is formed of TbFeCo (film thickness 300 Å), and this record holding layer 17 has its curie temperature and coercive force set to 230°C and 15 kilooersteds or greater, respectively. Further, the dielectric material layers 13 and 18 are formed of silicon nitride.

Figure 5 is a view for illustrating an embodiment of the optical recording and reproducing method of the present invention. In Figure 5, reference numeral 2 denotes groove portions used as the guide of tracking control, and in the present embodiment, the pitch of the groove portions 2 is 1.6 µm and the width of the groove portions 2 is 0.5 µm. A land portion 3 for recording information is provided between these groove portions 2. The width of the land portion 3 is 1.1 µm, and when information is to be recorded, as will be described later in detail, the land portion 3 is divided into a first information track 4 and a second information track 5, and information is recorded selectively and independently on each information track.

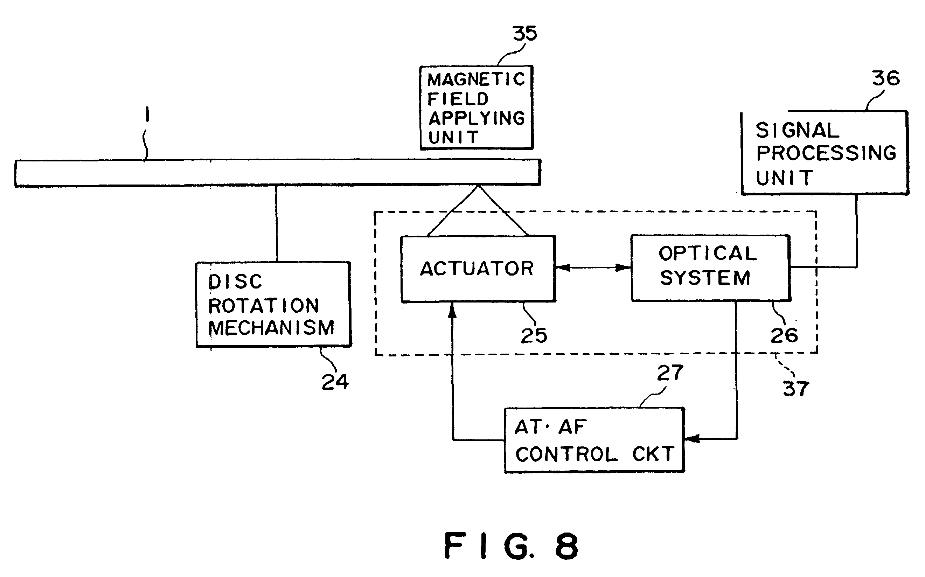

Figure 8 is a diagram for illustrating an embodiment of a driving apparatus used in the optical recording and reproducing method of the present invention. The driving apparatus is provided with a signal processing unit 36 for effecting signal processing such as the modulation and demodulation of data, a disc rotation mechanism 24 for rotatively driving a magneto-optical disc 1, a magnetic field applying unit 35, an optical head 37 including an actuator 25 and an optical system 26, and an AT and AF control circuit 27 for controlling the driving of the actuator 25. In the optical system 26, there are provided a semiconductor laser which is a light source, an objective lens for stopping down the laser beam thereof into a micro light spot, a sensor for detecting the reflected light from the magneto-optical disc 1, etc. The actuator 25 comprises a focus actuator for moving the objective lens in the optical system 26 in the focus direction thereof, and a tracking actuator for moving the objective lens in the tracking direction. On the basis of an AF error signal and an AT error signal detected by the optical system 26, the focus actuator and the tracking actuator are driven by the AT and AF control circuit 27, whereby focus control and tracking control are effected. Further, the AT and AF control circuit 27 is provided with a mechanism for controlling AT offset by an information track selecting signal and scanning a desired information track.

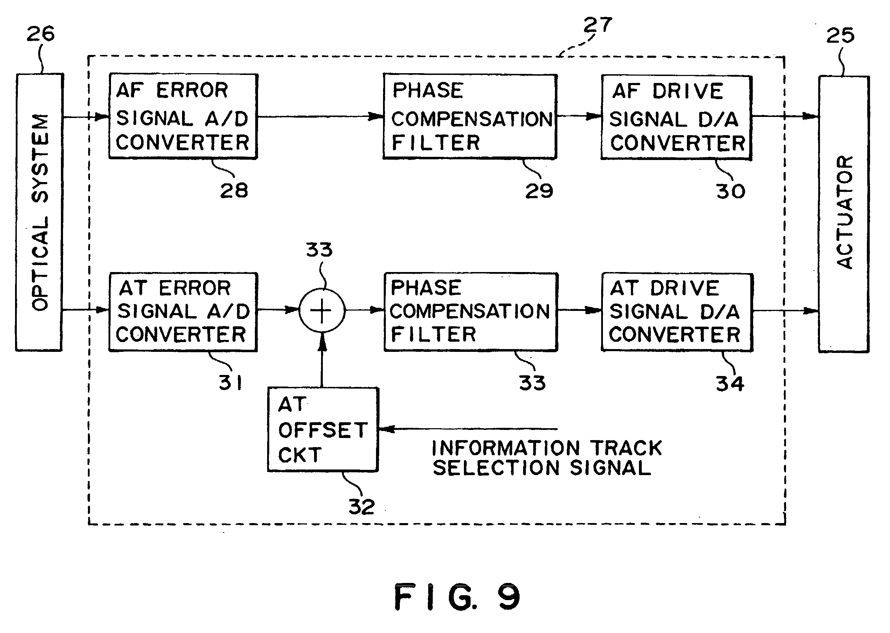

Figure 9 is a diagram showing the construction of the AT and AF control circuit 27 in detail. Focus control is effected so that the AF error signal detected by the optical system 26 may be A/D-converted, whereafter phase compensation processing may be effected by a phase compensation filter 29 and the signal may be returned to an analog signal of proper gain by an AF drive signal D/A converter 30, whereafter the analog signal may be inputted to the actuator to drive the actuator, whereby the light spot may be focused on the surface of the disc. Tracking control is effected so that the AT error signal detected by the optical system 26 may be A/D-converted, whereafter AT offset may be applied on the basis of the information track selecting signal, whereafter phase compensation processing may be effected by a phase compensation filter 33 and the signal may be returned to an analog signal of proper gain by an AT drive signal D/A converter 34, whereafter the analog signal may be inputted to the actuator to drive the actuator, whereby the light spot may follow the information tracks.

Description will now be made of an information recording method using the above-described medium and driving apparatus. When information is to be recorded, tracking is offset to thereby effect the alignment of a laser spot 6 emitted from a semiconductor laser (not shown) which is a light source so that the laser spot 6 may scan a desired information track in the land portion 3 of Figure 5. That is, offset is applied to the tracking error signal of the AT and AF control circuit 27 of Figure 8, whereby the selection of an information track is effected so that the laser spot 6 may deviate from the center and scan the desired information track, instead of scanning the center of the land portion 3. When information is to be recorded, for example, on a first information track 4, the laser spot 6 is offset by 0.225 µm toward the inner peripheral side from the center of the land portion 3 of the magneto-optical disc 1, as shown in Figure 5. In this state, the laser beam 6 scans on the first information track 4, whereby the recording of the information is effected.

In the present embodiment, as information recording conditions, it is to be understood that the recording of a signal is effected by an optical modulation system by the use of a laser beam of a wavelength 780 nm and that the numerical aperture of the objective lens for stopping down the laser beam is 0.55 and the line speed of recording is 9 m/s. Also, a signal to be recorded on the first information track 4 is a recording signal having a mark length 0.4 µm and a mark position interval 0.8 µm (recording frequency 11.25 MHz). A signal to be recorded on a second information track 5 is a recording signal having a mark length 0.4 µm and a mark position interval 1.2 µm (recording frequency 7.5 MHz). When under such conditions, the laser spot 6 is made to scan on the second information track 4, a recording mark 7 of a signal of a frequency 7.5 MHz is recorded as shown in Figure 5. A part of the laser spot 6 is also applied onto the adjacent second information track 5, but the intensity in that portion of the laser spot which is off the central portion is much weaker than that in the central portion and therefore no information is written thereinto.

Next, when a signal is to be recorded on the first information track 4, the recording of information is effected with the laser spot 6 by 0.225 µm toward the inner peripheral side from the center of the land portion 3. It is to be understood here that the recording of a signal having a mark length 0.4 µm and a mark position interval 0.8 µm (recording frequency 11.25 MHz is effected under the same conditions as those previously described, and as a result, a recording mark 7 of a signal of a frequency 11.25 MHz is recorded on the first information track 4. A recording mark 9 represents a recording mark being recorded by the laser spot 6.

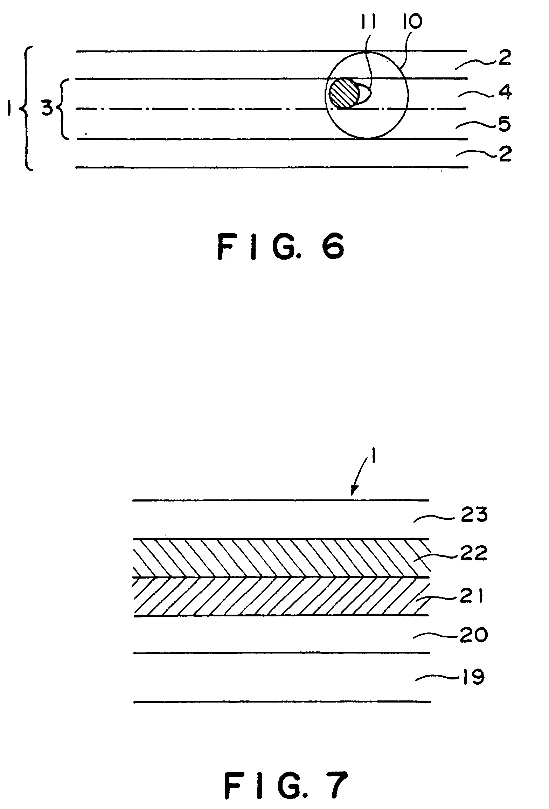

When the signal thus recorded is to be reproduced, a laser spot 10 for reproduction is made to scan on a desired information track as shown in Figure 6, and the reflected light from the surface of the medium at this time is detected by an optical sensor (not shown) and the recorded information is reproduced on the basis of a detection signal thus obtained. To make the laser spot 10 for reproduction scan on the desired information track, the laser spot 10 is offset by a technique similar to that during recording. When for example, the first information track 4 is to be reproduced, the laser spot 10 is offset by 0.225 µm toward the inner peripheral side as shown in Figure 6. Then, the laser spot 10 for reproduction is made to scan on the first information track 4 e.g. at reproduction power 3.5 mW and line speed 9 m/s, whereby the information is reproduced from the detection signal of the optical sensor at this time. In Figure 6, reference numeral 11 designates an area in which the recording mark recorded on the record holding layer 17 is transferred to the first reproducing layer 14 and the second reproducing layer 15 by the temperature rise by the laser spot 10 for reproduction, and by the recording mark being thus transferred to the first and second reproducing layers 14 and 15, super-resolution reproduction is effected. When the second information track 5 is to be reproduced, the laser spot 10 for reproduction is offset by 0.225 µm toward the outer peripheral side and the reproduction of information is likewise effected.

When the inventor performed recording of signal and reproduction thereof in accordance with the above method, a good result could be obtained. That is, as shown in Figure 5, a signal of a frequency 11.25 MHz was recorded on the first information track 4 and a signal of a frequency 7.5 MHz was recorded on the second information track 5. A laser spot of reproducing power 3.5 mW was made to scan on each of these information tracks at a line speed 9 m/s, and when the obtained reproduction signals were observed by means of a spectrum analyzer, a signal of 11.25 MHz was observed on the first information track 4 and CNR of 46 dB was obtained. At this time, a signal component of 7.5 MHz on the second information track 5 was not observed at all. Also, when under the same conditions, the laser spot 10 for reproduction was offset and the second information track 5 was reproduced, a signal of 7.5 MHz was observed and CNR of 49 dB was obtained. At this time, a signal component of 11.25 MHz on the first information track 4 was not observed at all. Thus, it could be confirmed that even if the land portion of a width 1.1 µm was divided into two information tracks, information could be recorded and reproduced well.

The layer construction used in the optical recording medium of the present invention is not limited to that of Figure 4, but use may be made of a magneto-optical disc provided with a reproducing layer as described in Japanese Laid-Open Patent Application No. 6-124500 wherein magnetization exhibiting vertical magnetization only in an area increased in temperature to a certain temperature area by the application of a laser beam for reproduction and recorded on a second holding layer is transferred to a reproducing layer and in the other area than that, the magnetization of the reproducing layer faces the inside of the surface and works as a mask for a signal recorded on the second holding layer. Figure 7 shows the cross-sectional structure of this magneto-optical disc. In Figure 7, silicon nitride (800 Å) as a dielectric material layer 20, GdFeCo (400 Å) as a reproducing layer 21, DyFeCo (200 Å) as a record holding layer 22 and silicon nitride (500 Å) as a dielectric material layer 23 are successively laminated on a transparent substrate 19.

The inventor did the evaluation experiment of a reproducing signal as in the previous embodiment by the use of the magneto-optical disc as described above. That is, the land portion 3 of 1.1 µm was divided into two information tracks, a signal of 11.25 MHz and a signal of 7.5 MHz were recorded on the first information track 4 and the second information track 5, respectively, the first and second information tracks were reproduced under the same reproducing conditions as those in the previous embodiment and the reproduction signals were observed by means of a spectrum analyzer. The result of the experiment was such that on the first information track, CNR of 43 dB was obtained by the signal of 11.25 MHz and on the second information track, CNR of 46 dB was obtained by the signal of 7.5 MHz. CNR was somewhat lower than in the previous embodiment, but the cross talk of the signal from the adjacent information track was not observed at all.

While in the above-described embodiment, two information recording tracks are provided on the land portion, the number of information recording tracks provided on the land portion is not limited to two, but a plurality of information recording tracks may be provided on the land portion and a plurality of light beams corresponding thereto may be applied at a time. Also, the tracking control at this time can be effected by the use of a tracking error signal obtained from the reflected light of a laser beam applied to the outermost two of the plurality of information recording tracks provided on the land portion.

Also, while the embodiment has been described by the use of a magneto-optical recording medium, the medium applicable to the present invention is not limited to a magneto-optical recording medium, but may be a phase-variable recording medium. The super-resolving technique of the phase-variable recording medium is disclosed, for example, in U.S. Patent No. 5,153,873. In U.S. Patent No. 5,153,873, as a medium to which the super-resolving technique is applicable, there is disclosed a medium including a layer of a phase-variable material for accumulating information therein and a layer for masking the information of a recording layer formed of a non-linear optical material.

## Claims

1. A method for effecting at least one of recording information on and of reproducing information from one of a plurality of information tracks (4, 5; 104, 105) formed on a land portion (3; 103) sandwiched between a pair of groove portions (2; 102) on a recording medium,
the method being **characterized in that**:
at least one of recording information on and reproducing information from each of the information tracks (4, 5; 104, 105) is effected by a single light beam, the information track (4, 5; 104, 105) on or from which said at least one of recording and reproducing is effected being changed over by applying an offset to the tracking control of the light beam.

2. A method according to claim 1, wherein said recording medium comprises a substrate (12; 19) wherein land and groove regions are formed, an optical recording layer being laminated on said substrate (12; 19); the width of the land and groove regions differing from each other.

3. A method according to claim 2, wherein the width of said land region (3; 103) is greater than the width of said groove region (2; 102).

4. A method according to claim 2 or 3, wherein said optical recording layer is a magneto-optical recording layer comprising a plurality of magnetic layers including:
a reproducing layer (21) which has an in-plane magnetization at room temperature becoming a perpendicular-to-the-plane magnetization above a predetermined temperature higher than room temperature; and
a recording layer (22) for storing information, the recording layer (22) having a perpendicular-to-the-plane magnetization between room temperature and the Curie temperature of the recording layer (22).

5. A method according to claim 2 or 3, wherein said optical recording layer includes a layer of a phase-variable material for storing information therein, and a mask layer for masking information stored in said storage layer.

## Patentansprüche

1. Verfahren zum Durchführen einer Aufzeichnung einer Information an und/oder einer Wiedergabe einer Information von einer Spur aus einer Vielzahl von Informationsspuren (4, 5; 104, 105), welche an einem zwischen einem Paar aus Vertiefungsabschnitten (2; 102) eingelegten Stegabschnitt (2; 103) an einem Aufzeichnungsträger ausgebildet sind,
**dadurch gekennzeichnet, dass**
die Aufzeichnung einer Information an und/oder die Wiedergabe einer Information von einer jeden Spur der Informationsspuren (4, 5; 104, 105) durch einen einzigen Lichtstrahl durchgeführt wird, wobei die Informationsspur (4, 5; 104, 105), an der oder von der die Aufzeichnung und/oder die Wiedergabe durchgeführt wird, durch Anwenden eines Versatzes hinsichtlich der Spursteuerung des Lichtstrahls gewechselt wird.

2. Verfahren nach Anspruch 1, wobei der Aufzeichnungsträger ein Substrat (12; 19) aufweist, wobei ein Stegbereich und ein Vertiefungsbereich ausgebildet ist, eine optische Aufzeichnungsschicht an dem Substrat (12; 19) geschichtet ist und die Breite des Stegbereichs und des Vertiefungsbereichs voneinander differieren.

3. Verfahren nach Anspruch 2, wobei die Breite des Stegbereichs (3; 103) größer als die Breite des Vertiefungsbereichs (2; 102) ist.

4. Verfahren nach Anspruch 2 oder 3, wobei die optische Aufzeichnungsschicht einer magneto-optischen Aufzeichnungsschicht mit einer Vielzahl an magnetischen Schichten entspricht, welche beinhalten:
eine Wiedergabeschicht (21), die bei Raumtemperatur eine Magnetisierung in Ebenenrichtung aufweist, welche über einer über der Raumtemperatur liegenden vorbestimmten Temperatur zu einer Magnetisierung senkrecht zu der Ebene wird und
eine Aufzeichnungsschicht (22) zur Speicherung einer Information, wobei die Aufzeichnungsschicht (22) zwischen der Raumtemperatur und der Curie-Temperatur der Aufzeichnungsschicht (22) eine Magnetisierung senkrecht zu der Ebene aufweist.

5. Verfahren nach Anspruch 2 oder 3, wobei die optische Aufzeichnungsschicht eine Schicht phasenvariablen Materials zur Speicherung einer Information darin und eine Maskenschicht zur Maskierung einer in der Speicherschicht gespeicherten Information aufweist.

## Revendications

1. Procédé pour effectuer au moins l'un d'un enregistrement d'informations sur et d'une reproduction d'informations à partir de l'une d'une pluralité de pistes d'informations (4, 5 ; 104, 105) formées sur une plage (3 ; 103) intercalée entre deux portions de gorges (2 ; 102) sur un support d'enregistrement,
le procédé étant **caractérisé en ce que**
au moins l'un d'un enregistrement d'informations sur et d'une reproduction d'informations à partir de chacune des pistes d'informations (4, 5 ; 104, 105) est effectué par un faisceau lumineux unique, la piste d'informations (4, 5 ; 104, 105) sur laquelle ou à partir de laquelle ledit au moins un d'un enregistrement et d'une reproduction est effectué étant changée par l'application d'un décalage à la commande de suivi du faisceau lumineux.

2. Procédé selon la revendication 1, dans lequel ledit support d'enregistrement comporte un substrat (12 ; 19) dans lequel des régions de plages et de gorges sont formées, une couche d'enregistrement optique étant stratifiée sur ledit substrat (12 ; 19) ; les régions de plages et de gorges ayant des largeurs différentes entre elles.

3. Procédé selon la revendication 2, dans lequel la largeur de ladite région de plage (3 ; 103) est plus grande que la largeur de ladite région de gorge (2 ; 102).

4. Procédé selon la revendication 2 ou 3, dans lequel ladite couche d'enregistrement optique est une couche d'enregistrement magnéto-optique comportant une pluralité de couches magnétiques comprenant :
une couche de reproduction (21) qui possède une aimantation dans le plan à la température ambiante devenant une aimantation perpendiculaire au plan au-dessus d'une température prédéterminée supérieure à la température ambiante ; et
une couche d'enregistrement (22) destinée à stocker des informations, la couche d'enregistrement (22) ayant une aimantation perpendiculaire au plan entre la température ambiante et la température de Curie de la couche d'enregistrement (22).

5. Procédé selon la revendication 2 ou 3, dans lequel ladite couche d'enregistrement optique comprend une couche d'une matière de phase variable pour le stockage d'informations en elle, et une couche formant un masque pour masquer les informations stockées dans ladite couche de stockage.
